# EUROPÄISCHE PATENTANMELDUNG

(11) **EP 1 845 068 A1**
(43) Veröffentlichungstag der Anmeldung: **17.10.2007**
(21) Anmeldenummer: 06405166.7
(22) Anmeldetag: 13.04.2006
(51) Int. Cl.: C03B 33/03, B65G 49/06

(54) **Vorrichtung zum Bearbeiten von Glasscheiben**

(71) Anmelder: Bystronic Maschinen AG, CH-4922 Bützberg (CH)
(72) Erfinder: Spitteler, Peter, 4443 Wittinsburg (CH)
(74) Vertreter: AMMANN PATENTANWÄLTE AG BERN

(57) **Zusammenfassung**

Die Vorrichtung zum Bearbeiten von Glasscheiben umfasst eine Unterlage (10), auf welcher eine Glasscheibe (1) beim Bearbeiten aufliegt und welche mindestens eine Öffnung (13) aufweist, und Hebemittel (40, 41) mit mindestens einem vertikal verschiebbaren Auflageelement (41), welches zum Heben der Glasscheibe von der Unterlage durch die Öffnung durchführbar ist und welches quer zur Vertikalen verschiebbar angeordnet ist.

## Beschreibung

Die vorliegende Erfindung bezieht sich auf eine Vorrichtung zum Bearbeiten von Glasscheiben gemäss Oberbegriff des Anspruchs 1.

Derartige Vorrichtungen werden beispielsweise zur Herstellung von Glasscheiben mit einer bestimmten Form verwendet. Um eine Beschädigung zu vermeiden, erfordert der Abtransport einer bearbeiteten Glasscheibe eine vorsichtige Handhabung, insbesondere dann, wenn die Glasscheiben, wie sie u.a. in Automobilen verwendet werden, mit einer empfindlichen Schicht versehen sind.

Aus der EP 1 101 743 A2 ist eine Vorrichtung mit einem verfahrbaren Endlosband sowie einer Vielzahl von Saugern bekannt, die an einem ortsfesten Träger vertikal verschiebbar angeordnet sind. Ist die Bearbeitung einer auf dem Endlosband aufliegenden Glasscheibe beendet, werden die Sauger mittels pneumatischer Aktuatoren durch Öffnungen im Endlosband geführt. Dadurch kann die Glasscheibe angehoben, von einer Übernahmevorrichtung übernommen und schliesslich abtransportiert werden. Damit die Öffnungen über den Saugern zu liegen kommen, muss das Endlosband um einen bestimmten Verfahrweg verfahren werden. Dieser Verfahrweg kann sich jedoch nach mehreren Umgängen des Endlosbandes derart ändern, dass das Endlosband wieder etwas zurückgefahren werden muss, um die Sauger zum Anheben einer Glasscheibe durch die Öffnungen durchführen zu können. Dies hat den Nachteil, dass der Abtransport einer Glasscheibe den Bearbeitungsprozess insgesamt verlangsamt. Auch wird eine gleichzeitige, präzise Bearbeitung von mehreren, auf dem Endlosband liegenden Glasscheiben erschwert oder gar verunmöglicht.

Ausgehend von diesem Stand der Technik liegt eine Aufgabe der vorliegenden Erfindung darin, eine Vorrichtung der eingangs erwähnten Art anzugeben, die einen schonenden und schnellen Abtransport einer Glasscheibe ermöglicht.

Eine Vorrichtung, die diese Aufgabe löst, ist im Anspruch 1 angegeben. Die weiteren Ansprüche geben bevorzugte Ausführungen an.

Die erfindungsgemässe Vorrichtung hat den Vorteil, dass durch das Vorsehen von Hebemitteln mit mindestens einem Auflageelement, welches quer zur Vertikalen verschiebbar angeordnet ist, ein Anheben einer auf der Unterlage liegenden Glasscheibe ermöglicht, ohne dass die Unterlage verschoben werden muss. Dadurch ist ein schneller und schonender Abtransport gewährleistet.

Die Erfindung wird im Folgenden anhand eines Ausführungsbeispiels unter Bezugnahme auf Figuren erläutert.
Es zeigen
Fig. 1 eine perspektivische Ansicht einer Anlage mit einer erfindungsgemässen Vorrichtung zum Bearbeiten von Glasscheiben;
Fig. 2 eine Draufsicht auf die Anlage gemäss Fig. 1, wobei das Förderband nicht dargestellt ist;
Fig. 3 einen Teil der erfindungsgemässen Vorrichtung in einer Seitenansicht;
Fig. 4 einen Teil der Brechstation der Anlage gemäss Fig. 1 in einer teilweise geschnittenen Seitenansicht;
Fig. 5 die Schneid- und Brechstation der Anlage gemäss Fig. 1 in einer teilweise geschnittenen Seitenansicht nach dem Transport einer Glasscheibe von der Schneidstation zur Brechstation;
Fig. 6 die Schneid- und Brechstation gemäss Fig. 5 beim Brechen der Glasscheibe;
Fig. 7 die Schneid- und Brechstation gemäss Fig. 5 nach dem Anheben der Glasscheibe; und
Fig. 8 die Schneid- und Brechstation gemäss Fig. 5 nach Einfahren der Transfervorrichtung.

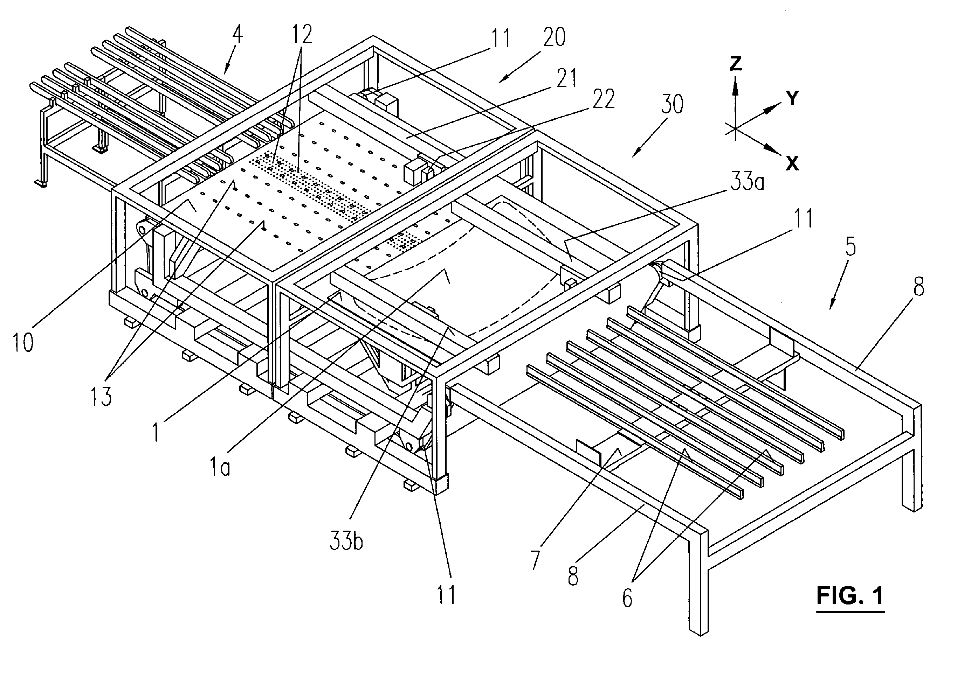

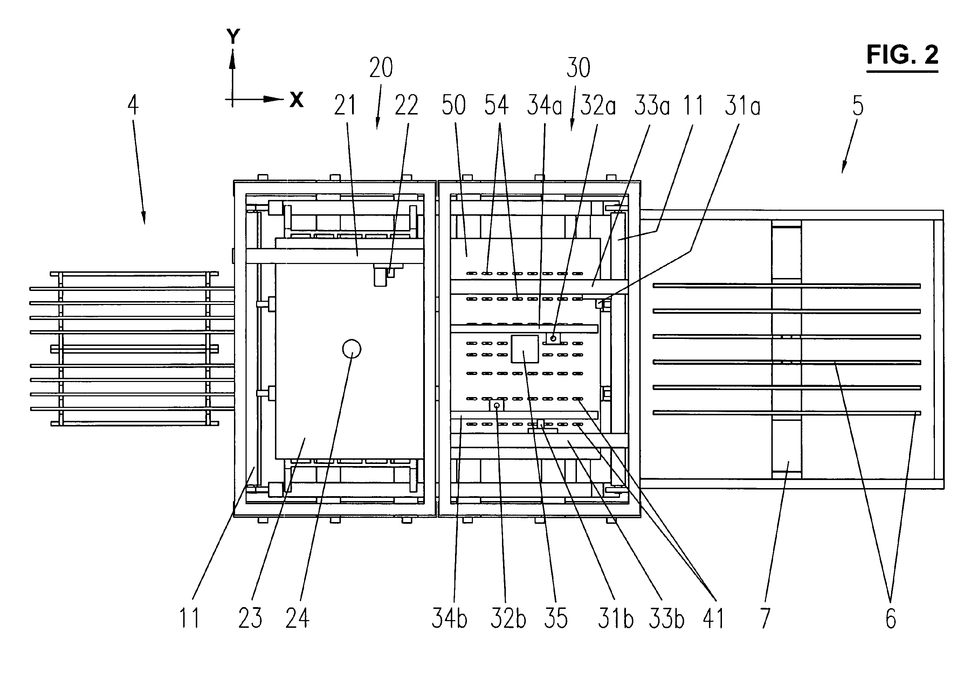

Die in den Fig. 1 und 2 dargestellte Anlage dient zum Ritzen und Brechen von Glasscheiben. Sie umfasst eine Schneidstation 20, eine Brechstation 30 und ein Förderband 10, mit welchem eine Glasscheibe von der Schneidstation 20 zur Brechstation 30 transportierbar ist. Vor der Schneidstation 20 ist eine Auftransportiervorrichtung 4 zum Auftransport von einer zu bearbeitenden Glasscheibe angeordnet. Nachfolgend zur Brechstation 30 ist eine Transfervorrichtung 5 angeordnet, welche zum Abtransport des herausgebrochenen Nutzteils 1a einer Glasscheibe 1 dient.

Die Auftransportiervorrichtung 4 weist angetriebene Transportbänder auf, welche nebeneinander und auf der gleichen Höhe wie die Oberseite des Förderbandes 10 angeordnet sind.

Die Transfervorrichtung 5 ist z.B. so ausgestaltet, wie sie in der nicht-vorveröffentlichten europäischen Patentanmeldung Nr. 04405646.3 der gleichen Anmelderin beschrieben ist. Die Transfervorrichtung 5 umfasst Auslegerelemente 6, die in Bezug auf eine Trägerplatte 7 horizontal verfahrbar angeordnet sind. Diese ist entlang zweier Trägerbalken 8 horizontal sowie vertikal verfahrbar angeordnet.

Das Förderband 10 ist als Endlosband ausgebildet und um Umlenkrollen 11 gelegt. Es dient einerseits als Auflagefläche für die zu bearbeitende Glasscheibe. Andererseits ist es in x-Richtung verfahrbar, sodass eine Glasscheibe von der Schneidstation 20 zur Brechstation 30 sowie die abgebrochenen Glasscherben von der Brechstation 30 zu einem anschliessenden (nicht dargestellten) Auffangbehälter transportiert werden können. Zum Verfahren des Förderbandes 10 ist mindestens eine der Umlenkrollen 11 an einen Antrieb gekoppelt. Die Verwendung des Förderbandes 10 erlaubt es, eine Glasscheibe so zu transportieren, dass ihre Oberseite unberührt bleibt.

Die Schneidstation 20 umfasst eine Schneidbrücke 21, welche oberhalb des Förderbandes 10 angeordnet ist. Die Schneidbrücke 21 ist in y-Richtung verfahrbar und mit einem in x-Richtung sowie in vertikaler Richtung z verfahrbaren Schneidwerkzeug 22 versehen, das ebenfalls drehbar ist. Die Bewegung der Schneidbrücke 21 und des Schneidwerkzeugs 22 erfolgt durch eine Steuerung, welche es erlaubt, das Schneidwerkzeug 22 präzise im Raum zu verfahren und um die vertikale Achse z zu drehen und so eine Glasscheibe mit Ritzlinien beliebiger Form zu versehen.

Die Schneidstation 20 umfasst weiter eine Stützplatte 23, auf welcher das Förderband 10 aufliegt. Diese dient dazu, die Kraft aufzufangen, welche das Schneidwerkzeug 22 beim Ritzen auf die Glasscheibe ausübt. Innerhalb der Stützplatte 23 ist ein Sauger 24 angeordnet, mittels welchem die Glasscheibe beim Ritzen festgehalten wird. Damit der Sauger 24 beim Anbringen eines Unterdrucks auf die Glasscheibe wirken kann, ist der mittlere Bereich des Förderbandes 10 über seinen gesamten Umfang mit Löchern 12 versehen.

Die Brechstation 30 umfasst eine Brecheinrichtung mit einem ersten oberen Brechkörper 31a und einem zweiten oberen Brechkörper 31b, die entlang der Oberseite der geritzten Glasscheibe 1 verfahrbar sind, und mit einem ersten unteren Brechkörper 32a und einem zweiten unteren Brechkörper 32b, die entlang der Unterseite der Glasscheibe 1 verfahrbar sind. Das Förderband 10 verläuft zwischen den oberen Brechkörpern 31a, 31b und den unteren Brechkörpern 32a, 32b. Die oberen Brechkörper 31a und 31b sind jeweils in x-Richtung sowie in vertikaler Richtung z verfahrbar an einer Brücke 33a bzw. 33b angeordnet, welche in y-Richtung verfahrbar ist. Die unteren Brechkörper 32a und 32b sind jeweils in x-Richtung verfahrbar an einer Brücke 34a bzw. 34b angeordnet, welche in y-Richtung verfahrbar ist.

Die Brecheinrichtung funktioniert ähnlich wie die Brecheinrichtung, welcher in der nicht-vorveröffentlichten europäischen Patentanmeldung Nr. 04405645.5 der gleichen Anmelderin beschreiben ist. Die Verwendung von verfahrbaren Brechkörpern hat den Vorteil, dass beliebige Formen aus einer geritzten Glasscheibe herausgebrochen werden können, ohne dass dazu Schablonen nötig sind, welche der gewünschten Scheibenform entsprechen.

Im Zentrum der Brechstation 30 befindet sich ein Festhaltemittel in Form eines Saugers 35, welcher unterhalb des Förderbandes 10 und zwischen der Stützplatte 23 und der gemäss Fig. 2 rechten Umlenkrolle 11 angeordnet ist. Der Sauger 24 der Schneidstation 20 und der Sauger 35 der Brechstation 30 sind auf einer in x-Richtung verlaufenden Achse angeordnet, sodass der mit Löchern 12 versehene Mittelstreifen des Förderbands 10 ebenfalls auf dem Sauger 35 zu liegen kommt. Eine Glasscheibe 1 wird während des Brechvorgangs mittels des Saugers 35 festgehalten, indem dieser mit Unterdruck beaufschlagt wird.

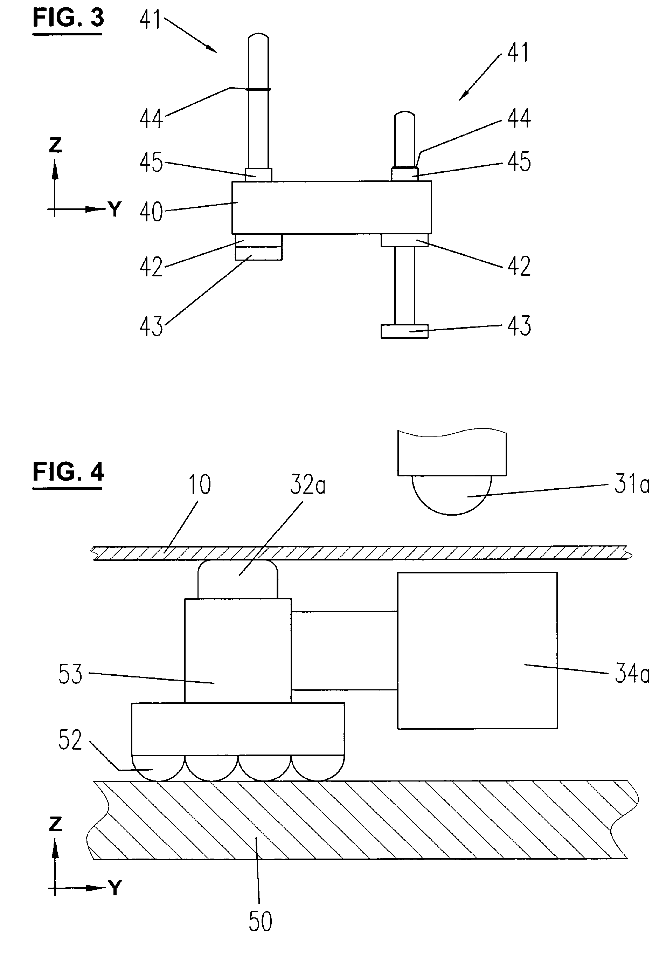

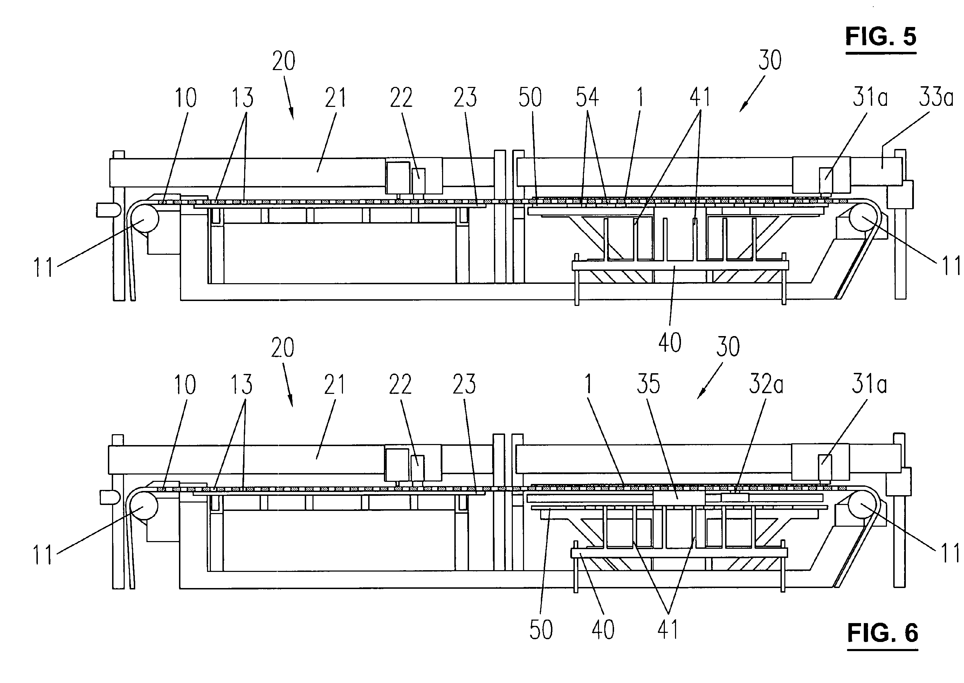

Unterhalb des Förderbandes 10 sind Hebemittel 40, 41 zum Heben einer Glasscheibe 1 angeordnet, wie sie in den Fig. 3 und 5 gezeigt sind. Die Hebemittel umfassen einen in vertikaler sowie in horizontaler Richtung verfahrbaren Träger 40 in Form einer Rahmenkonstruktion. Am Träger 40 sind Auflageelemente 41 in Form von Stäben aufgenommen, die matrixartig in der xy-Ebene verteilt angeordnet sind. Diejenigen Auflageelemente 41, welche auf derselben in x-Richtung, d.h. in Verfahrrichtung des Förderbandes 10 weisenden Achse liegen, sind im Wesentlichen äquidistant zueinander angeordnet. Die Abstände zwischen den Auflageelementen 41 in y-Richtung brauchen nicht unbedingt äquidistant zu sein. Die Auflageelemente 41 sind in Bezug auf den Träger 40 vertikal verschiebbar ausgestaltet, wobei jedes Auflageelement 41 eine ausgefahrene Position umfasst, wie sie das linke Auflageelement 41 in Fig. 3 zeigt, und eine eingefahrene Position, wie sie das rechte Auflageelement 41 in Fig. 3 zeigt.

In der ausgefahrenen Position ist das Auflageelement 41 mittels magnetischer Kräfte am Träger 40 gehalten. Zu diesem Zweck ist an der Unterseite des Trägers 40 ein Ring 42 mit Permanentmagneten angebracht, durch welchen das obere, stabförmige Ende des Auflageelements 41 durchgeführt ist. Das untere Ende des Auflageelements 41 ist mit einem Scheibenteil 43 versehen, welches aus einem ferromagnetischen Material besteht, z.B. Eisen. Der Ring 42 hält aufgrund der magnetischen Kräfte das Scheibenteil 43 und somit das Auflageelement 41 fest. Je nach Anwendungszweck kann das Teil 42 und/oder das Teil 43 mit Permanentmagneten versehen sein, um das ausgefahrene Auflageelement 41 am Träger 40 festhalten zu können.

Das obere Ende des Auflageelements 41, welches über die Oberseite des Trägers 40 hinausragt, ist mit meinem Sicherungsring 44 versehen. In der eingefahrenen Position liegt der Sicherungsring 44 auf einem Anschlag 45 auf, sodass ein Herunterfallen des Auflageelements 41 verhindert ist.

Einzelne Auflageelemente 41, welche benachbart zum Festhaltemittel 35 angeordnet sind, sind als Sauger ausgebildet, sodass beim Anlegen eines Unterdrucks eine auf den Auflageelementen 41 liegende Glasscheibe festgehalten wird. Dadurch ist gewährleistet, dass sich diese nicht seitlich verschiebt, wenn sie mittels der Hebemittel 40, 41 vom Förderband 10 angehoben und der Transfervorrichtung 5 übergeben wird.

Unterhalb des Trägers 40 ist eine Auflagefläche angeordnet (in den Figuren nicht sichtbar), die es erlaubt, die Auflageelemente 41 in die ausgefahrene Position zu bringen. Zu diesem Zweck wird der Träger 40 nach unten verfahren, sodass die Scheibenteile 43 der eingefahrenen Auflageelemente 41 auf diese Auflagefläche treffen und nach oben gestossen werden, bis der jeweilige Ring 42 das Scheibenteil 43 festhalten vermag. Sind alle Auflageelemente 41 in der ausgefahrenen Position, so kann ein beliebiges Auflageelement 41 in die eingefahrene Position gebracht werden, indem eine Kraft auf das obere Ende des entsprechenden Auflageelements 41 ausgeübt wird, die grösser als die durch den Magnetismus erzeugte Haltekraft ist. Bei dem hier beschriebenen Ausführungsbeispiel wird diese Kraft durch den oberen Brechkörper 31a bzw. 31b aufgebracht, indem dieser an die Position des Auflageelements 41 verfahren und gesenkt wird. Je nach Anwendungszweck können auch andere Mittel vorgesehen sein, um diese Kraft zu erzeugen.

Wie insbesondere Fig. 2 und 4 zeigen, umfasst die Brechstation 30 eine Stützplatte 50, auf welcher der untere Brechkörper 32a bzw. 32b mittels Gleitmitteln 52 verfahrbar angeordnet ist. Die Stützplatte 50 umfasst Öffnungen 54, durch welche die oberen Enden der Auflageelemente 41 durchführbar sind. Die Öffnungen 54 sind entsprechend der Anordnung der Auflageelemente 41 matrixartig in der xy-Ebene angeordnet und als Langloch oder Schlitze ausgebildet.

Wie in den Fig. 1 und 5 angedeutet, umfasst das Förderband 10 Öffnungen 13, durch welche die oberen Enden der Auflageelemente 41 durchführbar sind und welche als Langloch ausgebildet sind. Die Öffnungen 13 sind in der y-Richtung entsprechend der Verteilung der Auflageelemente in y-Richtung angeordnet. In x-Richtung, d.h. in Verfahrrichtung des Förderbandes 10 sind die Öffnungen 13, welche auf derselben in x-Richtung weisenden Achse liegen, im Wesentlichen äquidistant zueinander über den gesamten Umfang des Förderbandes 10 angeordnet. Der Abstand zwischen zwei benachbarten Öffnungen 13 in x-Richtung entspricht im Wesentlichen dem halben Abstand zwischen zwei benachbarten Auflageelementen 41 in x-Richtung. Die Anordnung und Ausgestaltung der Öffnungen 13 und 54 sind somit so gewählt, dass - unabhängig von der Position des Förderbandes 10 in Bezug auf die Stützplatte 50 - jeweils über einer Öffnung 54 in der Stützplatte 50 zumindest teilweise eine Öffnung 13 im Förderband 10 zu liegen kommt und so ein Auflageelement 41 durch beide Öffnungen 13 und 54 durchführbar ist.

Der Träger 40 ist zusammen mit den Auflageelementen 41 in x-Richtung verfahrbar ausgestaltet. Dies ermöglicht es, die Auflageelemente 41 in Bezug auf das Förderband 10 zu positionieren und sicher durch die Öffnungen 13 im Förderband 10 durchzuführen, ohne dass dieses dazu bewegt werden muss. Je nach Ausgestaltung der Vorrichtung können die Auflageelemente 41 auch in einer anderen Richtung als die x-Richtung horizontal oder sonstwie quer zur Vertikalen, z.B. auch geneigt zur Horizontalen, verfahrbar ausgestaltet sein.

Die Brechkörper 32a und 32b sind im Wesentlichen gleich ausgestaltet. Fig. 4 zeigt den ersten unteren Brechkörper 32a in einer teilweise geschnittenen Seitenansicht der Brechvorrichtung 30. Die Gleitmittel 52 sind an einer an die Brücke 34a gekoppelten Halterung 53 angebracht und umfassen drehbar gelagerte Kugeln, welche auf der Stützplatte 50 aufliegen. Der Brechkörper 32a ist am oberen Ende der Halterung 53 aufgenommen und umfasst eine Auflagefläche, auf welcher das Förderband 10 aufliegt.

Der obere Brechkörper 31a bzw. 31b ist kugel- oder rollenförmig ausgebildet. Das Förderband 10, welches eine Unterlage für die Glasscheibe bildet, verläuft zwischen den oberen Brechkörpern 31a, 31b und unteren Brechkörpern 32a, 32b. Diese Unterlage 10 ist aus einem flexiblen Material, welches so gewählt ist, dass sie einerseits ohne grösseres Durchhängen das Gewicht der Glasscheibe zu tragen und andererseits bei Ausüben eines Druckes auf die Glasscheibenoberfläche nachzugeben vermag. Das Förderband 10 liegt auf der Stützplatte 23, dem Sauger 35 sowie auf den oberen Umlenkrollen 11 auf. Es ist jedoch derart straff gespannt, dass es quer zu den oberen Umlenkrollen 11 keine Stützung braucht und somit freitragend ist. Geeignete Materialien für das Förderband 10 sind z.B. Kunststoff mit ausgewählter Elastizität oder ein Gewebeband, insbesondere ein Gewebeband aus Kunststofffasern.

Die hier beschriebene Anlage dient dazu, in möglichst rationeller Weise aus den unbearbeiteten Glasscheiben Nutzteile mit einer gewünschten Form herzustellen. Die Anlage ist so ausgelegt, dass die Oberseite des Nutzteils nicht berührt werden muss. Sie eignet sich daher besonders zur Bearbeitung von einseitig beschichteten Glasscheiben.

Der Herstellungsprozess wird im Folgenden anhand der Figuren 5 - 8 erläutert:

Die Position der Auflageelemente 41 wird entsprechend der herzustellenden Form des Nutzteils 1a festgelegt. Auflageelemente 41, welche sich beim Brechvorgang unterhalb des Nutzteils 1a befinden, werden in die ausgefahrene Position gebracht, während die restlichen Auflageelemente 41 oder zumindest die Auflageelemente 41, welche sich unterhalb des abzubrechenden Bereichs der Glasscheibe 1 befinden, in der eingefahrenen Position sind. Die Positionen der Auflageelemente 41 werden gesetzt, indem der Träger 40 zuerst gesenkt wird, sodass alle Auflageelemente 41 ausgefahren werden. Nach Heben des Träger 40 drückt der Brechkörper 31a bzw. 31b die einzufahrenden Auflageelemente 41 vom jeweiligen Ring 42 weg, sodass sie herunterfallen und vom jeweiligen Sicherungsring 44 in der eingefahrenen Position gehalten werden.

Die unbearbeitete Glasscheibe wird mittels der Auftransportiervorrichtung 4 auf das Förderband 10 gebracht und zur Schneidstation 20 transportiert, wo sie mittels des Saugers 24 festgehalten und gemäss Vorgabe mit Ritzlinien versehen wird.

Bevor die Glasscheibe mittels des Förderbandes 10 zur Brechstation 30 transportiert wird, wird die Stützplatte 50 der Brechstation 30 auf dieselbe Höhe wie die Stützplatte 23 der Schneidstation 20 verfahren (vgl. Fig. 5). Dadurch ist gewährleistet, dass das Förderband 10 beim Verfahren über den ganzen Verfahrweg gestützt ist und sich die Glasscheibe in Bezug auf das Förderband 10 nicht verschiebt, wenn sie von der Schneidstation 20 zur Brechstation 30 bewegt wird. Es ist somit nicht erforderlich, die geritzte Glasscheibe 1 an der Brechstation 30 nochmals zu positionieren, da die Koordinaten der Glasscheibe 1 aus dem Verfahrweg des Förderbandes 10 berechnet werden können. Beim Heben der Stützplatte 50 befinden sich die unteren Brechkörper 32a und 32b im Randbereich der Brechstation 30, sodass sie nicht mit der Stützplatte 50 kollidieren können.

Beim Transport der Glasscheibe zur Brechstation 30 kann bereits die nächste Glasscheibe auftransportiert und zur Schneidstation 20 gebracht werden, um so beide Stationen 20 und 30 gleichzeitig betreiben und ein möglichst hohe Taktrate in der Herstellung erzielen zu können.

Vor dem Brechvorgang wird die Stützplatte 50 gesenkt und die geritzte Glasscheibe 1 durch den Sauger 35 festgehalten (vgl. Fig. 6). In Transportrichtung der Glasscheibe 1 gesehen, d.h. in der positiven x-Richtung ist der Bereich der Glasscheibe 1, welcher links vom Sauger 35 angeordnet ist, für den ersten Brechkörper 32a zugänglich, während der rechte Bereich der Glasscheibe 1 für den zweiten Brechkörper 32b zugänglich ist.

Zum Abbrechen des Randes der Glasscheibe 1 werden die ersten Brechkörper 31a und 32a und die zweiten Brechkörper 31b und 32b mittels Steuerung, z.B. einer CNC-Steuerung, derart verfahren, dass sie zeitlich koordiniert auf die Glasscheibe 1 einwirken, beispielsweise gleichzeitig oder nacheinander auf den linken und den rechten Bereich der Glasscheibe 1. Zum Brechen wird der obere Brechkörper 31a bzw. 31b auf den abzubrechenden Rand der Glasscheibe 1 aufgesetzt und zusammen mit dem unteren Brechkörper 32a bzw. 32b in der xy-Ebene verfahren. Der obere Brechkörper 31a bzw. 31b wird dabei mit einer vorbestimmten Kraft oder einem vorbestimmten Hub gegen die Glasoberfläche gepresst, während der untere Brechkörper 32a bzw. 32b das Förderband 10 und die Glasscheibe 1 stützt und so in Bezug auf den oberen Brechkörper 31a bzw. 31b angeordnet ist, dass ein bestimmtes Moment auf den Rand der Glasscheibe 1 ausgeübt wird, welches den Bruch herbeiführt. Die Stützplatte 50 bietet eine starre Auflagefläche für den unteren Brechkörper 32a bzw. 32b, sodass sich dieser beim Einwirken des oberen Brechkörpers 31a bzw. 31b nicht vertikal verschiebt und ein sauberer Bruch gewährleistet ist.

Zum Abtransport des herausgebrochenen Nutzteils 1a der Glasscheibe 1 werden die Positionen der Öffnungen 13 im Förderband 10 erfasst und der Träger 40 horizontal so verschoben, dass die ausgefahrenen Auflageelemente 41 sicher durch die Öffnungen 13 geführt werden können. Die Stützplatte 50 wird vertikal auf die Höhe der Stützplatte 23 verschoben. Der Träger 40 wird vertikal verfahren, wodurch der Nutzteil 1a der Glasscheibe 1 auf die ausgefahrenen Auflageelemente 41 zu liegen kommt und sich ein Zwischenraum zwischen dem Nutzteil 1a und dem Förderband 10 bildet (vgl.

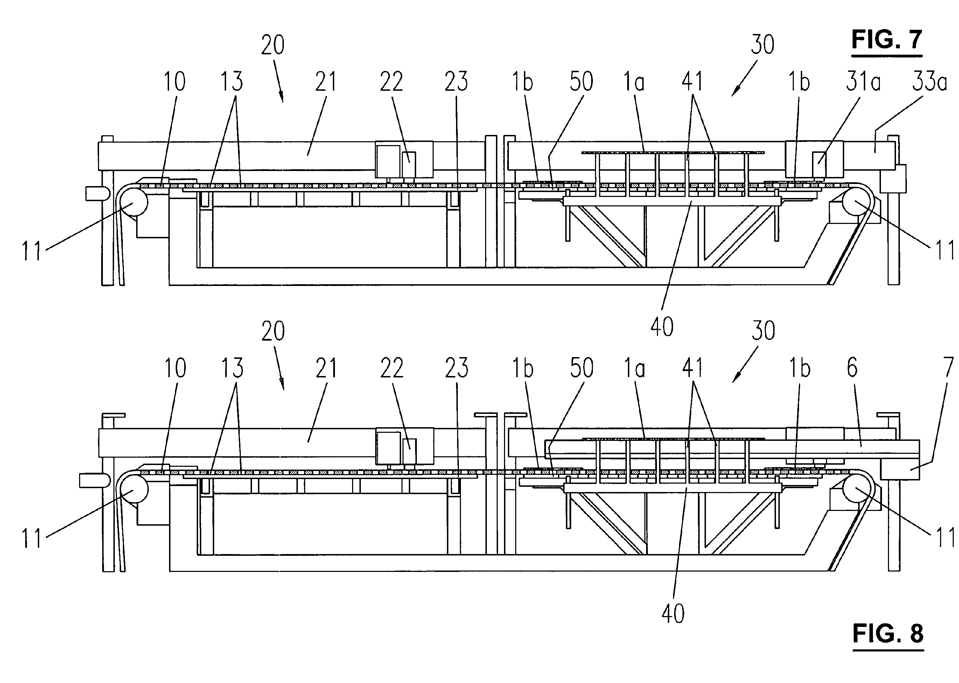

Fig. 7). Die abgebrochenen Glasscherben 1b bleiben auf dem Förderband 10 liegen.

Die Transfervorrichtung 5 wird zur Brechstation 30 hin verfahren und die Auslegerelemente 6 relativ zur Trägerplatte 7 ausgefahren. Diese wird angehoben, bis die Glasscheibe 1a auf den Auslegerelementen 6 aufliegt (vgl. Fig. 8). Durch Verfahren der Auslegerelemente 6 sowie der Transfervorrichtung 5 insgesamt wird die Glasscheibe 1a verschoben und einem zwischenspeicher oder einer Station zur weiteren Bearbeitung, beispielsweise Schleifen und/oder Bohren übergeben.

Um die nächste geritzte Glasscheibe brechen zu können, wird die Brechstation 30 wieder in den in Fig. 5 gezeigten Zustand gebracht. Glasscherben 1b, die noch bei der Brechstation 30 liegen, werden beim Verfahren des Förderbandes 10 in x-Richtung befördert, bis sie schliesslich in einen Auffangbehälter fallen.

Die hier beschriebenen Massnahmen betreffen verschiedene, vorteilhafte Aspekte, die nicht alle zusammen, sondern auch unabhängig voneinander verwendet werden können. Insbesondere brauchen sie nicht unbedingt in der hier dargestellten Anlage eingesetzt werden, sondern sind je nach Auslegung der eingesetzten Vorrichtung zum Bearbeiten von Glasscheiben anwendbar. Die verschiedenen Aspekte und deren Vorteile können wie folgt zusammengefasst werden:
- Hebemittel mit mindestens einem vertikal verschiebbaren Auflageelement (41), welches zum Heben der Glasscheibe von der Unterlage (10) durch die Öffnung (13) durchführbar ist, wobei das Auflageelement quer zur Vertikalen verschiebbar angeordnet ist. Diese Ausgestaltung erlaubt es, die Glasscheibe von der Unterlage zu heben, ohne dass die Unterlage verschoben werden muss und ohne dass die Oberseite der Glasscheibe berührt wird. Dadurch ist ein schneller und schonender Abtransport der Glasscheibe gewährleistet. Im Weiteren ist eine gleichzeitige, präzise Bearbeitung von mehreren, auf der Unterlage liegenden Glasscheiben gewährleistet.
- Hebemittel mit einem Träger (40), an welchem mindestens ein Auflageelement (41) zwischen zwei Endpositionen vertikal verschiebbar angeordnet ist, wobei das Auflageelement in der einen Endposition mittels magnetischer Kräfte am Träger gehalten ist. Diese Ausgestaltung erlaubt eine kostengünstige und einfache Herstellung der Hebemittel. Insbesondere ist kein Antrieb erforderlich, um das Auflageelement von der einen Endposition in die andere Endposition bringen zu können.
- Einrichtung zum Brechen einer Glasscheibe mit mindestens einem Brechkörper (32a, 32b), welcher auf einer Stützplatte (50) verfahrbar angeordnet ist. Beim Brechvorgang werden die Kräfte, welche auf den Brechkörper wirken, durch die Stützplatte aufgefangen, sodass sich der Brechkörper vertikal nicht verschiebt und eine in der Höhe genau definierte Stützfläche bildet. Dadurch ist ein präziser Bruch gewährleistet.
- Anordnung mit einer Schneidstation (20), einer Brechstation (30) und einem Förderband (10), mit welchem ein geritzte Glasscheibe von der Schneidstation zur Brechstation transportierbar ist. Diese Anordnung hat den Vorteil, dass an beiden Stationen gleichzeitig Glasscheiben bearbeitbar sind und somit Glasscheiben der gewünschten Form mit einer hohen Taktrate herstellbar sind. Bei Bedarf ist es auch möglich, eine geritzte Glasscheibe bereits an der Schneidstation zu brechen, indem eine Schablone mit der gewünschten Scheibenform zwischen Förderband und Glasscheibe gelegt wird und der freistehende Rand weggedrückt wird.

Aus der vorangehenden Beschreibung sind dem Fachmann zahlreiche Abwandlungen zugänglich, ohne den Schutzbereich der Erfindung zu verlassen, der durch die Ansprüche definiert ist.

So ist es z.B. denkbar, anstelle von mehreren Auflageelementen 41 ein einziges, vertikal verschiebbares Auflageelement, z.B. in Form eines Sauger mit einer genügend grossen Auflagefläche zu verwenden, welches durch die Öffnung 13 in der Unterlage 10 durchführbar und quer zur Vertikalen verschiebbar angeordnet ist. Ist die Auflagefläche des Auflageelements 41 gering gewählt, so werden zur Bildung einer Dreipunktauflage mindestens 3 Auflageelemente verwendet.

Es ist auch denkbar, bei Bedarf an der Brechstation eine Schablone zu verwenden, um eine geritzte Glasscheibe zu brechen, und/oder den Rand einer Glasscheibe bereits an der Schneidstation vollständig oder teilweise abzubrechen.

## Patentansprüche

1. Vorrichtung zum Bearbeiten von Glasscheiben, umfassend
eine Unterlage (10), auf welcher eine Glasscheibe (1) beim Bearbeiten aufliegt und welche mindestens eine Öffnung (13) aufweist, und
Hebemittel (40, 41) mit mindestens einem vertikal verschiebbaren Auflageelement (41), welches zum Heben der Glasscheibe von der Unterlage durch die Öffnung durchführbar ist, **dadurch gekennzeichnet, dass**
das Auflageelement quer zur Vertikalen verschiebbar angeordnet ist.

2. Vorrichtung nach Anspruch 1, wobei die Hebemittel einen Träger (40) umfassen, an welchem das Auflageelement (41) vertikal verschiebbar angeordnet ist und welcher quer zur Vertikalen verschiebbar ist.

3. Vorrichtung nach Anspruch 2, wobei das Auflageelement (41) zwischen zwei Endpositionen verschiebbar ist und in der einen Endposition mittels magnetischer Kräfte am Träger (40) gehalten ist.

4. Vorrichtung nach Anspruch 2 oder 3, wobei der Träger (40) vertikal verschiebbar ist.

5. Vorrichtung nach einem der vorangehenden Ansprüche, wobei sie mehrere Auflageelemente (41) umfasst, welche durch Öffnungen (13) in der Unterlage (10) durchführbar sind und welche quer zur Vertikalen verschiebbar angeordnet sind.

6. Vorrichtung nach einem der vorangehenden Ansprüche, wobei sie eine vertikal verschiebbare Stützplatte (50) umfasst, mit welcher die Unterlage (10) stützbar ist.

7. Vorrichtung nach Anspruch 6, wobei sie zum Brechen der Glasscheibe mindestens einen Brechkörper (32a, 32b) umfasst, welcher auf der Stützplatte (50) verfahrbar angeordnet ist.

8. Vorrichtung nach Anspruch 6 oder 7, wobei die Stützplatte (50) mindestens eine Öffnung (54) umfasst, durch welche das Auflageelement (41) durchführbar ist.

9. Vorrichtung nach einem der vorangehenden Ansprüche, wobei ein flexibles Förderband (10) als Unterlage dient, welches vorzugsweise als Endlosband ausgebildet ist.

10. Vorrichtung nach Anspruch 9, wobei sie eine Schneidstation (20) zum Ritzen einer Glasscheibe und eine Brechstation (30) zum Brechen der Glasscheibe umfasst, wobei mittels des Förderbands (10) eine Glasscheibe von der Schneidstation (20) zur Brechstation (30) transportierbar ist.
